# EUROPEAN PATENT APPLICATION

(11) **EP 4 685 906 A1**
(43) Date of publication of application: **28.01.2026**
(21) Application number: 24797464.5
(22) Date of filing: 26.04.2024
(51) Int. Cl.: H01M 10/0562, C01B 17/20, H01M 10/052

(54) **HYDROGEN SULFIDE-BASED SOLID ELECTROLYTE FOR ALL-SOLID-STATE BATTERY AND METHOD FOR MANUFACTURING SAME**

(30) Priority: 26.04.2023 KR 20230054988; 25.04.2024 KR 20240055408
(71) Applicant: LG Energy Solution, Ltd., Seoul 07335 (KR); Gwangju Institute of Science and Technology, Gwangju 61005 (KR)
(72) Inventor: LEE, Wonrak, Daejeon 34122 (KR); KIM, Sangryun, Gwangju 61005 (KR); KIM, Taeseung, Gwangju 61005 (KR); KIM, Ji Young, Daejeon 34122 (KR); KIM, Youngbok, Daejeon 34122 (KR)
(74) Representative: Goddar, Heinz J.
(86) International application number: PCT/KR2024/005677
(87) International publication number: WO 2024/225810

(57) **Abstract**

The present invention provides a sulfurous acid-based solid electrolyte compound for an all-solid-state battery represented by Formula 1, a method for preparing the same, and an all-solid-state battery using the same.

## Description

### [Technical Field]

The present application claims the benefit and priority to Korean Patent Application No. 10-2023-0054988, filed April 26, 2023, and Korean Patent Application No. 10-2024-0055408, filed April 25, 2024, the disclosures of which are incorporated herein by reference in their entirety.

The present invention relates to a sulfurous acid-based solid electrolyte for all-solid-state batteries and a method for preparing the same.

### [Related Art]

Among the next-generation lithium-ion batteries, the all-solid-state battery industry has been researching the application of lithium metal negative electrode to design batteries with high energy density. However, the direct contact between the solid electrolyte and the lithium metal negative electrode in all-solid-state batteries leads to increased resistance at the solid electrolyte/negative electrode interface due to the chemical/electrochemical instability of the solid electrolyte, which reduces battery performance, lifetime, and stability.

Recently, to solve the above problems, studies are underway to reduce the interfacial resistance between electrode and electrolyte by forming an interfacial phase between solid electrolyte and lithium metal.

However, the interfacial phases in the studies have a higher redox level than conventional lithium metal negative electrodes, which limits the operating voltage of the cell and reduces the energy density.

Therefore, it is necessary to develop a solid electrolyte for all-solid-state batteries that is stable on a lithium metal negative electrode that can solve the above limitations.

### [Prior Art Reference]

### [Non-patent Reference]

(Non-patent Reference 1) Journal of Power Sources 244 (2013) 707-710

### [Detailed Description of the Invention]

### [Technical Problem]

It is an object of the present invention to provide a sulfurous acid-based solid electrolyte with high ionic conductivity comprising both a conventional sulfide-based solid electrolyte of the Li₂S-P₂S₅ series and a hydride-based solid electrolyte reported to be stable on a lithium metal negative electrode.

### [Technical solution]

To fulfill the purposes described above, the present invention provides a sulfurous acid-based solid electrolyte compound for all-solid-state batteries represented by Formula 1 below.

[Formula 1]. Li_{x-y}M₈₋ₓQ_{20-2x-y}X_{y} (wherein 6<x≤7.6, and 0<y<1),

wherein M is at least one element selected from the group consisting of P, As, Si, Ge, Al and B,
Q is at least one element selected from the group consisting of S, Se and N,
X is a halogen element, BH₄, BF₄, NH₂, or NO₃,

Further, in the present invention, the y value may be in the range of 0.15y≤0.9.

Further, in the present invention, the x value may be in the range of 6.5≤x≤7.5.

Further, in the present invention, M may be P.

Further, in the present invention, Q may be S.

Further, in the present invention, X may be BH₄.

Furthermore, in order to accomplish the above purposes, the present invention may provide a method of preparing a sulfurous acid-based solid electrolyte compound for an all-solid-state battery, comprising the steps of a) mixing lithium sulfide (Li₂S) and phosphorus pentasulfide (P₂S₅) by ball milling; and b) adding LiBH₄ to the mixture of step a) above, followed by ball milling.

Furthermore, in order to accomplish the above purposes, the present invention may provide a solid electrolyte comprising a sulfurous acid-based solid electrolyte compound for an all-solid-state battery.

Furthermore, in order to accomplish the above purposes, the present invention may provide an all-solid-state battery comprising the solid electrolyte.

Furthermore, in the present invention, the all-solid-state battery may comprise the solid electrolyte in at least one of the positive electrode, negative electrode, or solid electrolyte film.

### [Advantageous Effects]

In the prior art, substituting the BH₄⁻ anion for the thiophosphate (PS₄³⁻) anion site (4b site) was problematic because the anion radii were too different to form a solid solution, resulting in forming impurities.

According to the present invention, it is possible to provide a solid electrolyte that is free of impurities by placing a BH₄- anion at the S₂- anion site (4a or 4d site) to form a solid solution.

### [Brief Description of Drawing]

FIG. 1 is a graph showing room temperature EIS data of a sulfurous acid-based solid electrolyte for all-solid-state batteries according to one example of the present invention.
FIG. 2 is a graph showing an Arrhenius plot of a sulfurous acid-based solid electrolyte for all-solid-state batteries according to one example of the present invention.
FIG. 3 is a graph showing the ionic conductivity and activation energy at room temperature of a sulfurous acid-based solid electrolyte for all-solid-state batteries according to one example of the present invention.
FIG. 4 is a schematic diagram illustrating the composition ratio of a sulfurous acid-based solid electrolyte for all-solid-state batteries according to the prior art.
FIG. 5 is a schematic diagram illustrating the composition ratio of a sulfurous acid-based solid electrolyte for all-solid-state batteries according to the present invention.

### [Best Mode for Practicing the Invention]

The inventors of the present invention used a quasi-ternary system (Li₂S-P₂S₅-LiBH₄) to determine the synthesis feasibility of the compositions, and proceeded with the synthesis by solid-phase method in the Li_{x-y}P₈₋ₓS_{20-2x-y}(BH₄)_{y}, (wherein 6<x≤7.6, and 0≤y≤3.8) composition, and discovered a new method for preparing a sulfuric acid-based solid electrolyte for all-solid-state batteries.

For this purpose, a solid electrolyte was synthesized by adding BH₄- anions to the thiophosphate (PS₄³⁻) anion site (4b site) to form a solid solution, rather than adding BH₄⁻ anions to the S²⁻ anion site (4a or 4d site) to form a solid solution as previously studied.

Thiophosphate means a compound or anion having S or O around a tetrahedral P.

As a result, the present invention provides a sulfurous acid-based solid electrolyte compound for all-solid-state batteries represented by Formula 1 below.

[Formula 1] Li_{x-y}M₈₋ₓQ_{20-2x-y}X_{y} (wherein 6<x≤7.6, and 0<y<1),

wherein M is at least one element selected from the group consisting of P, As, Si, Ge, Al and B,
Q is at least one element selected from the group consisting of S, Se and N, and
X is a halogen element, BH₄, BF₄, NH₂, or NO₃.

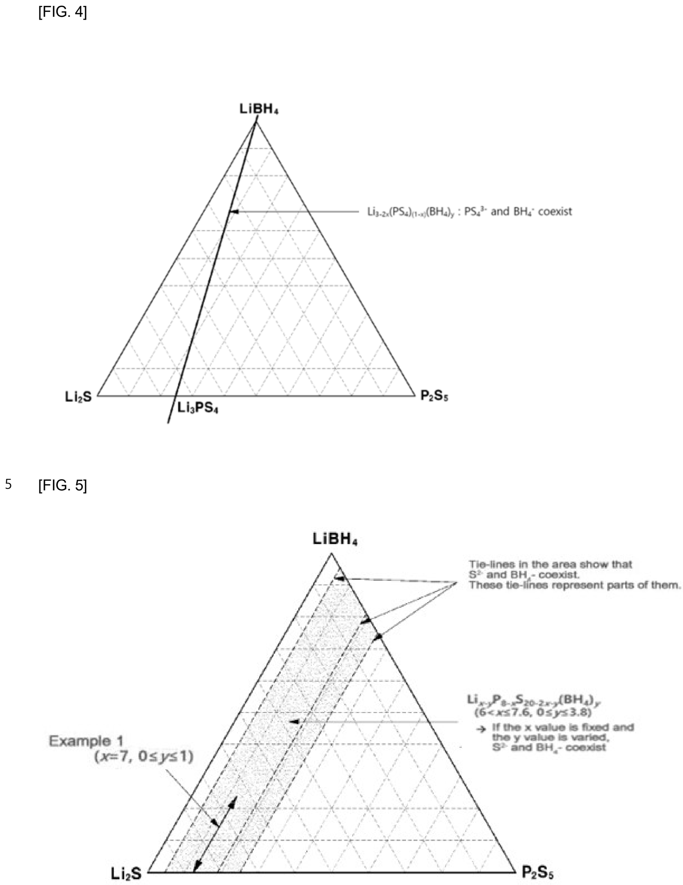

FIGs. 4 and 5 are schematic representations of the proportions of Li₂S, P₂S₅, and LiBH₄ in a sulfurous acid-based solid electrolyte compound for all-solid-state batteries to illustrate the differences in each component.

FIG. 4 shows a sulfurous acid-based solid electrolyte compound for all-solid-state batteries according to the prior art, and FIG. 5 shows a sulfurous acid-based solid electrolyte compound for all-solid-state batteries according to the present invention.

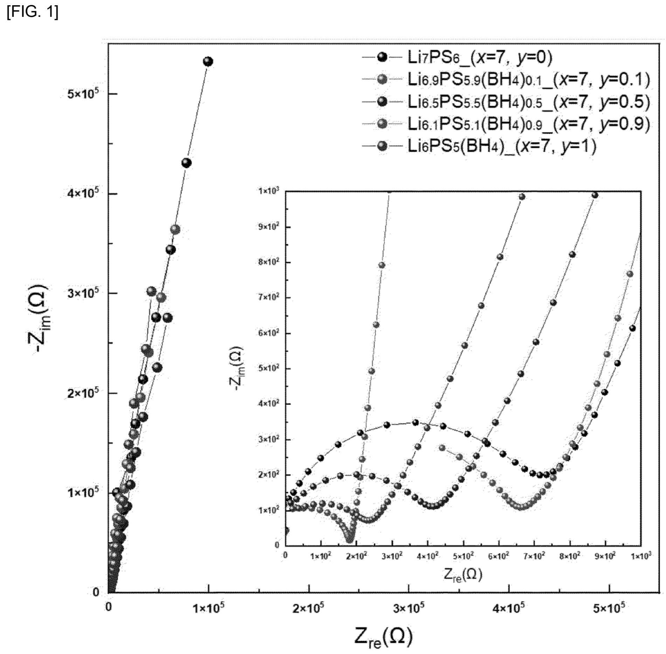

In the case of sulfurous acid-based solid electrolyte compounds for all-solid-state batteries according to the prior art, as shown in FIG. 1, they can be represented by formula Li₃₋₂ₓ(PS₄)₍₁₋ₓ₎(BH₄)ₓ, indicating the coexistence of PS₄³⁻ and BH₄⁻.

For the sulfurous acid-based solid electrolyte compound for all-solid-state batteries according to the present invention, it is represented by formula Li_{x-y}P₈₋ₓS_{20-2x-y}(BH₄)_{y}, (wherein 6<x≤7.6, and 0<y<1), and the tie-lines in the colored area shows that S²⁻ and BH₄⁻ coexist, and represent parts of them, i.e., if the x value is fixed and the y value is varied, S²⁻ and BH₄- coexist.

This difference is considered to be caused due to the fact that the prior art substitutes the BH₄- anion at the thiophosphate (PS₄³⁻) anion site (4b site) to form a solid solution, whereas the present invention substitutes the BH₄⁻ anion at the S²⁻ anion site (4a or 4d site) to form a solid solution.

**In** one example of the sulfurous acid-based solid electrolyte compound for all-solid-state batteries according to the present invention, the y value may have a range of 0.1≤y≤0.9, preferably 0.2≤y≤0.8, more preferably 0.3≤y≤0.7, and most preferably 0.4≤y≤0.6.

**If** the y value is less than 0.1, the ionic conductivity is lowered and the activation energy is increased, and if the y value is greater than 0.9, the activation energy is increased.

**In** one example of the sulfurous acid-based solid electrolyte compound for all-solid-state batteries according to the present invention, the x value may have a range of 6.5≤x≤7.5, and more preferably may be 7.

**In** one example of the sulfurous acid-based solid electrolyte compound for all-solid-state batteries according to the present invention, the M may preferably be P.

**In** one example of the sulfurous acid-based solid electrolyte compound for all-solid-state batteries according to the present invention, the Q may preferably be S.

**In** one example of the sulfurous acid-based solid electrolyte compound for all-solid-state batteries according to the present invention, the X may preferably be BH₄.

Furthermore, in order to accomplish the above objectives, the present invention provides a method of preparing a sulfurous acid-based solid electrolyte compound for an all-solid-state battery, comprising the steps of a) mixing lithium sulfide (Li₂S) and phosphorus pentasulfide (P₂S₅) by ball milling; and b) adding LiBH₄ to the mixture of step a) above, followed by ball milling.

Furthermore, in order to accomplish the above objectives, the present invention provides a solid electrolyte comprising a sulfurous acid-based solid electrolyte compound for an all-solid-state battery.

In one example of the present invention, the solid electrolyte may further comprise other sulfide-based solid electrolyte in addition to the above sulfurous acid-based solid electrolyte compound.

The further included sulfide-based solid electrolyte contains sulfur (S) and has the ionic conductivity of a metal belonging to Group 1 or 2 of the periodic table, and may include an Li-P-S-based glass or Li-P-S-based glass ceramic. Non-limiting examples of such sulfide-based solid electrolyte include Li₂S-P₂S₅, Li₂S-Lil-P₂S₅, Li₂S-Lil-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and it may include one or more of the foregoing. However, it is not particularly limited thereto.

Further, the present invention may provide an all-solid-state battery comprising the solid electrolyte.

Furthermore, in the present invention, the all-solid-state battery may comprise a positive electrode, a negative electrode, or a solid electrolyte film, any one or more of which may comprise the solid electrolyte.

For the positive electrode according to one example of the present invention, the positive electrode current collector is for the support of the positive electrode active material, and is not particularly limited, as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, wherein aluminum-cadmium alloys are preferably used, and calcined carbon, non-conductive polymers surface treated with a conductive material, or conductive polymers may also be used as the alloys.

The positive electrode current collector can form microscopic irregularities on its surface to strengthen the binding force with the positive electrode active material, and various forms can be used, such as films, sheets, foils, meshes, nets, porous bodies, foams, or non-woven bodies.

The positive electrode active material may comprise a positive electrode active material and optionally a conductive material and a binder.

The positive electrode active material may vary depending on the type of all-solid-state battery. For example, the positive electrode active material may include, but is not limited to, a layered compound such as lithium cobalt oxide (LiCoO2), or lithium nickel oxide (LiNiO2), or a compound substituted with one or more transition metals; a lithium manganese oxide such as Li1+xMn2-xO4(0≤x≤0.33), LiMnO3, LiMn2O3, or LiMnO2; a lithium copper oxide (Li2CuO2); a vanadium oxide, such as LiV3O8, V2O5, or Cu2V2O7; an Ni site-type lithium nickel oxide represented by formula LiNi1-xMxO2 (wherein M is Co, Mn, Al, Cu, Fe, Mg, B, or Ga; and 0.01≤x≤0.3); a lithium manganese complex oxide represented by formula LiMn2-xMxO2 (wherein M is Co, Ni, Fe, Cr, Zn or Ta; and 0.01≤x≤0.1) or Li2Mn3MO8 (wherein M is Fe, Co, Ni, Cu or Zn); a lithium manganese complex oxide with spinel structure represented by LiNixMn2-xO4; LiCoPO4; LiFePO4; an elemental sulfur (S8); and a sulfur-based compound such as Li2Sn (wherein n is 1), an organosulfur compound or a carbon-sulfur polymer ((C2Sx)n, wherein x is 2.5 to 50, and n=2).

The conductive material is a material that electrically connects the electrolyte and the positive electrode active material and serves as a pathway for electrons to move from the current collector to the positive electrode active material, and any material can be used without restriction as long as it does not cause any chemical changes in the lithium secondary battery and has porosity and conductivity.

For example, the conductive material can be a porous carbon-based material, wherein the carbon-based material includes carbon black, graphite, graphene, activated carbon, carbon fiber, and metallic fibers, such as metal mesh; metallic powders, such as copper, silver, nickel, or aluminum; or organic conductive materials, such as polyphenylene derivatives. These conductive materials may be used alone or in combination.

Products which are currently and commercially available as a conductive material include the Acetylene Black series (Chevron Chemical Company or Gulf Oil Company), Ketjen Black EC series (Armak Company), Vulcan XC-72 (Cabot Company), and Super P (MMM). Examples include acetylene black, carbon black, and graphite.

Further, the positive electrode may further comprise a binder, wherein the binder further increases the cohesion between the components constituting a positive electrode and between the components and the current collector, and any binder known in the art may be used.

For example, the binder may be one, or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

For the negative electrode according to one example of the present invention, the negative electrode, like the positive electrode above, may include a conductive material and a binder as required. **In** this case, the negative electrode current collector, conductive material, and binder may be those normally used in negative electrodes, as described above.

The negative electrode active material according to one example of the present invention may be a lithium metal, a lithium alloy, or a negative electrode-free form.

The negative electrode-free form may comprise only a negative electrode current collector, or may be a structure coated with a carbon layer comprising a binder on the negative electrode current collector.

### [Mode for Practicing the Invention]

The above example is presented to illustrate the present invention.

However, the following example is provided for the purpose of illustrating the present invention, and the present invention is not limited to the following example.

### Example: Preparation of a sulfurous acid-based solid electrolyte using solid-state reaction (x=7, 0≤y≤1)

All experiments were performed in a glove box which was not exposed to moisture and oxygen. Except for the compositions wherein y is 0 or y is 1, the compositions wherein y is 0.1, 0.5, or 0.9 were synthesized by solid-state reaction using mechanochemical ball milling in two rounds. In the first round, lithium sulfide (Li₂S) and phosphorus pentasulfide (P₂S₅) in the following molar ratios were synthesized at 400 RPM for 20 hours, in a 1.5 g batch. In the second round, lithium borohydride (LiBH₄) was added to the sample obtained in the first round in the following molar ratio and synthesized at 400 RPM for 20 hours, in a 1.0 g batch.

The compositions wherein y is 0 or y is 1 were solid-phase synthesized under the same conditions as in the first round above by adding lithium sulfide (Li₂S) and phosphorus pentasulfide (P₂S₅) in the following molar ratios. The sulfurous acid-based solid electrolyte was obtained by the above process.

Specifically, 1) primary ball milling was performed with lithium sulfide (Li₂S) and phosphorus pentasulfide (P₂S₅) in molar ratios of 87.5:12.5 (7:1), 85.7:14.3 (6:1), 83.3:16.7 (5:1), 80:20 (4:1), 75:25 (3:1), 66.7:33.3 (2:1), 50:50 (1:1), and 0:100 (0:1).

2) To the above primary ball-milled mixture, lithium borohydride (LiBH4) was added, and then a secondary ball-milling was performed to prepare Li_{x-y}P₈₋ₓS_{20-2x-y}(BH₄)_{y}, (wherein 6<x≤7.6, and 0≤y≤1), wherein x is 7 and y is 0 to 1.0

### Comparative Example: Li₇PS₆ [(1) Hayashi Akitoshi et al., The Chemical Society of Japan, Chemistry Letters 2001, Vol.30, No.9]

Lithium sulfide (Li₂S) and phosphorus pentasulfide (P₂S₅) were solid-phase synthesized in one round at 370 RPM for 20 hours in a molar ratio of 87.5:12.5 (7:1). The results are tabulated as follows

**[Table 1]**

| Comparative Example 1 | The mole ratio of each ingredient | Ionic conductivity (mS/cm) |
|---|---|---|
| Li7PS6 | 87.5:12.5 | 0.2 |

### Experimental Example 1. Method of measuring properties

In the example and the experimental example according to the present invention, the measurement of properties was performed as follows.
1.1) XRD analysis method: The sample was placed in a quartz capillary to prevent exposure to air and moisture, and then completely sealed with liquid paraffin before measurement.
1.2) XRD analysis conditions: X-ray wavelength of Cu ka (1.54 Å) was used. [scan range : 10°-70°, step size : 0.02°, scan speed : 2°/min]
2.1) Method of preparing an electrode cell for EIS analysis: Using a 10 mm diameter electrode (area: 0.7854 cm2), 100 to 120 mg of solid electrolyte was added to the electrode and pressed with a pressure of 441.8 MPa.
2.2) EIS analysis conditions: Measurement was performed under the conditions of AC of 0.1V, frequency of 10 MHz to 1 Hz.
2.3) EIS analysis method: The temperature was increased and decreased by 10°C, to 25°C to 110°C, and the resistance value was measured at that time, and the ionic conductivity was calculated based on Formula 1).

Formula 1) Ion conductivity (σ) = Thickness (I)/(Resistivity (Ω) X Area (a), [Area: 0.7854 cm², Thickness: 0.7-1.0 mm].

Among the compounds represented by Li_{x-y}P₈₋ₓS_{20-2x-y}(BH₄)_{y} prepared above, it was found that the composition wherein 6<x≤7.6 and 0≤y≤1.0, and the ratio of coexistence of S²⁻ anions and BH₄⁻ anions and the ionic conductivity vary depending on the value of y when x is 7.

Specifically, for the sulfurous acid-based solid electrolytes for all-solid-state batteries prepared in the example and the comparative example, the room temperature EIS data for each composition is shown in FIG. 1. The ionic conductivity was confirmed by measuring the resistance of each electrolyte composition synthesized by FIG. 1.

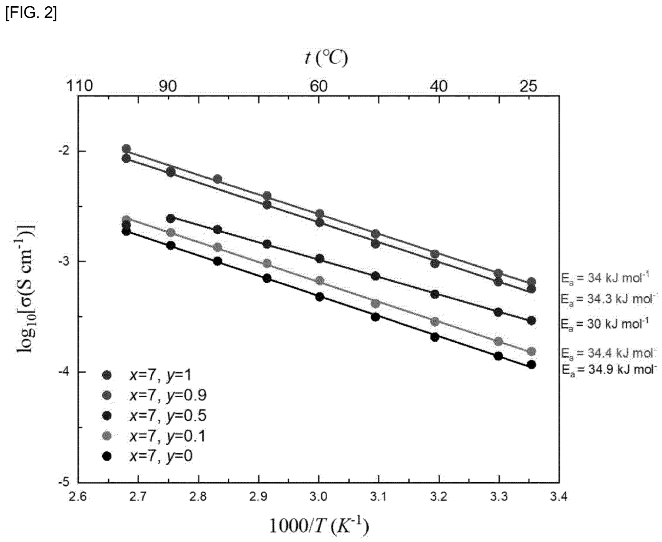

*For the sulfurous acid-based solid electrolytes for all-solid-state batteries prepared in the example and the comparative example, Arrhenius plots of the activation energy values for each composition were prepared and shown in FIG. 2.

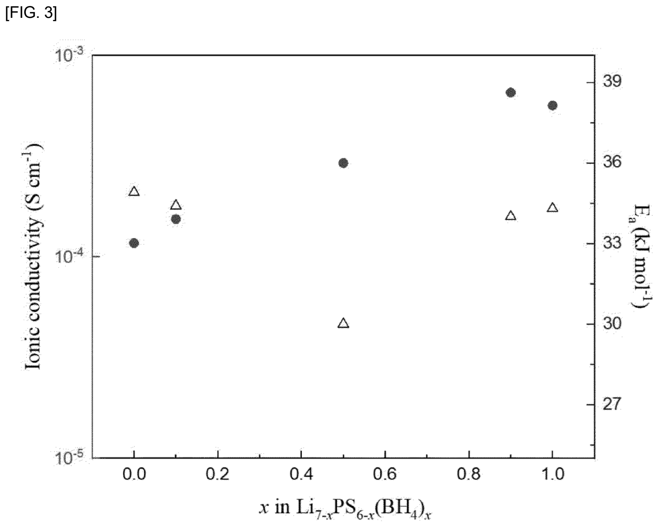

Furthermore, the ionic conductivity and activation energy at room temperature according to each composition for the sulfurous acid-based solid electrolyte for all-solid-state batteries prepared in the example and the comparative example are shown in Table 2 and FIG. 3 below.

**[Table 2]**

| **Composition** | **Ionic conductivity** [S cm⁻¹] | **Activation energy** [kJ mol⁻¹] |
|---|---|---|
| Li₇PS₆ | 1.17 x 10⁻⁴ | 34.9 |
| Li_{6.9}PS_{5.9}(BH₄)_{0.1} | 1.54 x 10⁻⁴ | 34.4 |
| Li_{6.5}PS_{5.5}(BH₄)_{0.5} | 2.92 x 10⁻⁴ | 30 |
| Li_{6.1}PS_{5.1}(BH₄)_{0.9} | 6.54 x 10⁻⁴ | 34 |
| Li₆PS₅(BH₄) | 5.65 x 10⁻⁴ | 34.3 |

It was found that the ionic conductivity was the lowest in Comparative Example 1, increased from Example 1 to Example 3, and then decreased again in Comparative Example 2. It was seen that the activation energy was the highest in Comparative Example 1, decreased from Example 1, was the lowest in Example 2, and then increased again. In other words, when considering ionic conductivity and activation energy together, it was seen that Example 2 (wherein y is 0.5) showed the best effect.

## Claims

1. A sulfurous acid-based solid electrolyte compound for all-solid-state batteries represented by Formula 1 below:
[Formula 1] Li_{x-y}M₈₋ₓQ_{20-2x-y}X_{y} (wherein 6<x≤7.6, and 0<y<1)
wherein M is at least one element selected from the group consisting of P, As, Si, Ge, Al and B,
Q is at least one element selected from the group consisting of S, Se and N,
X is a halogen element, BH₄, BF₄, NH₂, or NO₃.

2. The sulfurous acid-based solid electrolyte compound for all-solid-state batteries according to claim 1, wherein the y value is in the range of 0.1≤y≤0.9.

3. The sulfurous acid-based solid electrolyte compound for all-solid-state batteries according to claim 1, wherein the x value is in the range of 6.5≤x≤7.5.

4. The sulfurous acid-based solid electrolyte compound for all-solid-state batteries according to claim 1, wherein M is P.

5. The sulfurous acid-based solid electrolyte compound for all-solid-state batteries according to claim 1, wherein Q is S.

6. The sulfurous acid-based solid electrolyte compound for all-solid-state batteries according to claim 1, wherein X is BH₄.

7. A method of preparing the sulfurous acid-based solid electrolyte compound for all-solid-state batteries according to claim 1, comprising the steps of:
a) mixing lithium sulfide (Li₂S) and phosphorus pentasulfide (P₂S₅) by ball milling; and
b) adding LiBH₄ to the mixture of step a) above, followed by ball milling.

8. A solid electrolyte comprising a sulfurous acid-based solid electrolyte compound for all-solid-state batteries according to claim 1.

9. An all-solid-state battery comprising the solid electrolyte according to claim 8.

10. The all-solid-state battery according to claim 9, wherein the all-solid-state battery comprises the solid electrolyte in at least one of the positive electrode, negative electrode, or solid electrolyte film.
